# EUROPEAN PATENT APPLICATION

(11) **EP 4 543 135 A1**
(43) Date of publication of application: **23.04.2025**
(21) Application number: 23823675.6
(22) Date of filing: 29.05.2023
(51) Int. Cl.: H04W 76/20, H04W 72/0457, H04W 84/12

(54) **WIRELESS COMMUNICATION DEVICE AND WIRELESS COMMUNICATION METHOD, AND WIRELESS COMMUNICATION TERMINAL AND WIRELESS COMMUNICATION METHOD**

(30) Priority: 17.06.2022 JP 2022098011
(71) Applicant: Sony Group Corporation, Tokyo 108-0075 (JP)
(72) Inventor: HIRATA Ryuichi, Tokyo 108-0075 (JP); TANAKA Yusuke, Tokyo 108-0075 (JP); SUGAYA Shigeru, Tokyo 108-0075 (JP)
(74) Representative: D Young & Co LLP
(86) International application number: PCT/JP2023/019862
(87) International publication number: WO 2023/243378

(57) **Abstract**

The present technology relates to a wireless communication apparatus and a wireless communication method, and a wireless communication terminal and a wireless communication method capable of improving communication efficiency.

The wireless communication apparatus of the present technology includes a communication control unit that determines a link for frame transmission to a wireless communication terminal from among a plurality of links on the basis of information regarding a first transition time, for each of the plurality of links, required for the wireless communication terminal to transition from a multi-link state in which communication is performed by using the plurality of links to a single-link state in which communication can be performed by using any one of the links. The present technology can be applied to, for example, a wireless communication apparatus compatible with an EMLSR operation.

## Description

### TECHNICAL FIELD

The present technology relates to a wireless communication apparatus and a wireless communication method, and a wireless communication terminal and a wireless communication method, and more particularly, to a wireless communication apparatus and a wireless communication method, and a wireless communication terminal and a wireless communication method capable of improving communication efficiency.

### BACKGROUND ART

Wireless communication using a plurality of links (multi-link operation (MLO)) has been studied as a method for coping with a requirement of high transmission speed such as 8K transmission or xReality (xR). The "link" is a wireless transmission path through which data can be transmitted between two wireless communication apparatuses.

When the MLO is performed, each link is selected from, for example, a plurality of mutually independent wireless transmission paths divided in a frequency domain.

A device compatible with the MLO is referred to as a multi-link device (MLD). The MLD is a logical entity including two or more stations (STAs), and has only one service access point (SAP) to a higher layer. An MLD in which each of the included STAs serves as an access point (AP) is referred to as an AP MLD, and an MLD in which each of the included STAs serves as a non-AP STA is referred to as a non-AP MLD. Each entity in the MLD can be expressed as, for example, an AP belonging to the AP MLD (AP affiliated with AP MLD) or a non-AP STA belonging to the non-AP MLD (non-AP STA affiliated with non-AP MLD) to specify that it is an entity inside the MLD.

As one of the MLOs, an enhanced multi-link single radio (EMLSR) operation or an enhanced multi-link multi-radio (EMLMR) operation capable of performing communication by using a plurality of links and transmitting and receiving a plurality of streams by using one link is standardized.

### CITATION LIST

### NON-PATENT DOCUMENT

Non-Patent Document 1: Minyoung Park, et al., "CC34 CR EMLSR part2," IEEE 802.11-21/0287r9, Dec. 20, 2021

### SUMMARY OF THE INVENTION

### PROBLEMS TO BE SOLVED BY THE INVENTION

During an EMLSR operation and an EMLMR operation, a non-AP MLD transitions from a multi-link state in which communication is performed by using a plurality of links to a single-link state in which a plurality of streams is transmitted and received by using one link. If an AP MLD transmits a frame to the non-AP MLD before the state transition is completed in the non-AP MLD, the non-AP MLD may fail to receive the frame.

Therefore, as disclosed in Non-Patent Document 1, the non-AP MLD notifies the AP MLD of EMLSR padding delay and EMLSR transition delay, and the AP MLD needs to wait to transmit the frame to the non-AP MLD in a period in which the non-AP MLD transitions from the multi-link state to the single-link state.

The transition time required for the non-AP MLD to transition from the multi-link state to the single-link state varies depending on, for example, the operation frequency of the non-AP MLD. In a notification method disclosed in Non-Patent Document 1, since only the maximum value of the transition time required for the non-AP MLD to transition the states is notified to the AP MLD, the AP MLD waits to transmit the frame even though the state transition is completed in the non-AP MLD, and thus there is a possibility that communication efficiency during the EMLSR operation reduces.

The present technology has been made in view of such a situation, and is intended to enable improvement of communication efficiency.

### SOLUTIONS TO PROBLEMS

A wireless communication apparatus of a first aspect of the present technology includes a communication control unit that determines a link for frame transmission to a wireless communication terminal from among a plurality of links on the basis of information regarding a first transition time, for each of the plurality of links, required for the wireless communication terminal to transition from a multi-link state in which communication is performed by using the plurality of links to a single-link state in which communication can be performed by using any one of the links.

A wireless communication method of the first aspect of the present technology, performed by a wireless communication apparatus, includes determining a link for frame transmission to a wireless communication terminal from among a plurality of links on the basis of information regarding a first transition time, for each of the plurality of links, required for the wireless communication terminal to transition from a multi-link state in which communication is performed by using the plurality of links to a single-link state in which communication can be performed by using any one of the links.

A wireless communication terminal of a second aspect of the present technology includes a communication control unit that communicates with a wireless communication apparatus, in which the communication control unit transmits, to the wireless communication apparatus, information regarding a first transition time, for each of a plurality of links, required for the wireless communication terminal to transition from a multi-link state in which communication is performed by using the plurality of links to a single-link state in which communication can be performed by using any one of the links.

A wireless communication method of the second aspect of the present technology, performed by the wireless communication terminal that communicates with the wireless communication apparatus, includes transmitting, to the wireless communication apparatus, information regarding a first transition time, for each of a plurality of links, required for the wireless communication terminal to transition from a multi-link state in which communication is performed by using the plurality of links to a single-link state in which communication can be performed by using any one of the links.

In the first aspect of the present technology, the link for frame transmission to the wireless communication terminal is determined on the basis of the information regarding the first transition time, for each of the plurality of links, required for the wireless communication terminal to transition from the multi-link state in which communication is performed by using the plurality of links to the single-link state in which communication can be performed by using any one of the links.

In the second aspect of the present technology, the information regarding the first transition time required for the wireless communication terminal to transition from the multi-link state in which channel scanning of the plurality of links is performed to the single-link state in which communication can be performed by using each of the plurality of links is transmitted to the wireless communication apparatus by the communication control unit that communicates with the wireless communication apparatus by using the plurality of links.

### BRIEF DESCRIPTION OF DRAWINGS

Fig. 1 is a diagram illustrating a configuration example of a wireless communication system to which the present technology may be applied.
Fig. 2 is a diagram schematically illustrating a configuration example of a non-AP MLD.
Fig. 3 is a sequence diagram of an EMLSR operation.
Fig. 4 is a diagram illustrating a single-link transmission/reception state of Link 3.
Fig. 5 is a diagram illustrating a multi-link scanning state.
Fig. 6 is a diagram illustrating a single-link transmission/reception state of Link 1.
Fig. 7 is a diagram schematically illustrating another configuration example of the non-AP MLD.
Fig. 8 is a sequence diagram of an EMLMR operation.
Fig. 9 is a diagram illustrating a multi-link operation state.
Fig. 10 is a diagram illustrating a single-link operation state of Link 1.
Fig. 11 is a block diagram illustrating a functional configuration example of an AP MLD.
Fig. 12 is a block diagram illustrating a functional configuration example of the non-AP MLD compatible with the EMLSR operation.
Fig. 13 is a block diagram illustrating a functional configuration example of the non-AP MLD compatible with the EMLMR operation.
Fig. 14 is a flowchart for describing a flow of an operation in which the non-AP MLD notifies the AP MLD of information regarding a transition time of states in the own terminal.
Fig. 15 is a diagram illustrating an example of a configuration example of a Multi-link Element.
Fig. 16 is a flowchart for describing a flow of an operation in which the AP MLD determines a link for frame transmission.
Fig. 17 is a sequence diagram of an EMLSR operation by the wireless communication system of the present technology.
Fig. 18 is a sequence diagram of an EMLMR operation by the wireless communication system of the present technology.

### MODE FOR CARRYING OUT THE INVENTION

Hereinafter, modes for carrying out the present technology will be described. The description will be made in the following order.
1. System Configuration
2. Configuration and Operation of Each Device
3. First Embodiment (Example of EMLSR operation)
4. Second Embodiment (Example of EMLMR operation)

### <1. System Configuration>

### -Configuration example of wireless communication system

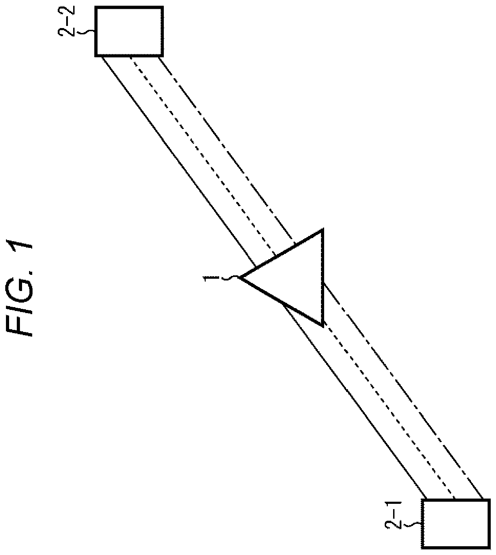

Fig. 1 is a diagram illustrating a configuration example of a wireless communication system to which the present technology may be applied.

In the wireless communication system of Fig. 1, data is transmitted and received by wireless communication using a plurality of links (MLO).

When the MLO is performed, each link is selected from, for example, a plurality of mutually independent wireless transmission paths divided in a frequency domain. For example, each channel selected from among a plurality of channels included in any one of frequency bands such as 2.4 GHz band, 5 GHz band, 6 GHz band, and 920 MHz band is used as each link.

A device compatible with the MLO is referred to as an MLD as described above. The MLD is a logical entity including two or more STAs, and has only one SAP to a higher layer. An MLD in which each of the included STAs serves as an AP is referred to as an AP MLD, and an MLD in which each of the included STAs serves as a non-AP STA is referred to as a non-AP MLD. Each entity in the MLD can be expressed as, for example, an AP belonging to the AP MLD or a non-AP STA belonging to the non-AP MLD to specify that it is an entity inside the MLD.

The wireless communication system in Fig. 1 includes one AP MLD 1 and two non-AP MLDs of a non-AP MLD 2-1 and a non-AP MLD 2-2. The non-AP MLDs 2-1 and 2-2 are connected to the AP MLD 1.

In Fig. 1, a solid line connecting the AP MLD 1 and the non-AP MLDs 2-1 and 2-2 indicates Link 1, and a broken line connecting the AP MLD 1 and the non-AP MLDs 2-1 and 2-2 indicates Link 2. An alternate long and short dash line connecting the AP MLD 1 and the non-AP MLDs 2-1 and 2-2 indicates Link 3. As Link 1 to Link 3, three channels may be selected from one frequency band, or three channels may be selected from different frequency bands. In addition, the number of links used between the AP MLD and the non-AP MLDs is not limited to three. For example, two links may be used, or four or more links may be used.

The AP MLD 1 is a wireless communication apparatus that operates as a base station compatible with the MLO. The AP MLD 1 communicates with the non-AP MLDs 2-1 and 2-2 by using Link 1 to Link 3.

The non-AP MLDs 2-1 and 2-2 are wireless communication terminals that operate as terminals compatible with the MLO.

Note that the number of non-AP MLDs connected to the AP MLD 1 is not limited to two, and may be any number. Hereinafter, in a case where it is not necessary to distinguish the non-AP MLDs 2-1 and 2-2 from each other, the non-AP MLDs 2-1 and 2-2 are each simply referred to as the non-AP MLD **2.**

### -EMLSR operation

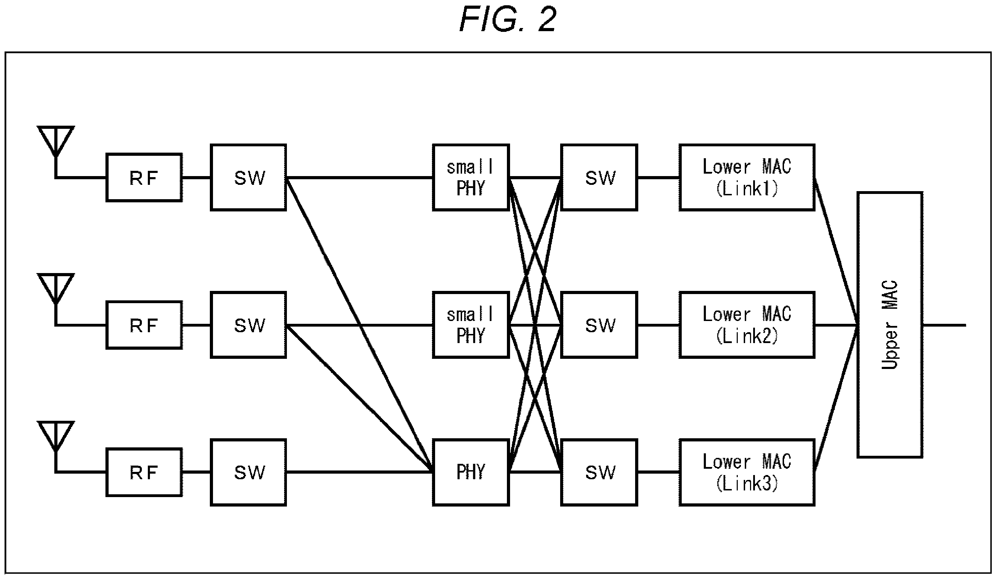

Fig. 2 is a diagram schematically illustrating a configuration example of the non-AP MLD 2.

As illustrated in Fig. 2, the non-AP MLD 2 includes three antennas, three RF units, two simple PHY units (small PHY units), one PHY unit, three lower MAC units, and one upper MAC unit.

The three sets of the antenna and the RF unit are each operable for the same frequency band.

The PHY unit is, for example, a signal processing unit compatible with IEEE802.11be. The simple PHY unit can perform the processing similar to the PHY unit, but is a signal processing unit whose function is limited as compared with the PHY unit. The simple PHY unit is compatible with, for example, channel scanning and reception processing of a multi-user request to send (MU-RTS) frame or a buffer status report poll (BSRP) trigger frame.

As a configuration of the non-AP MLD compatible with the MLO, it is assumed that a plurality of PHY units compatible with IEEE802.11be is mounted, but there is a case where the same number of PHY units as the number of links used for communication cannot be mounted due to restriction of a terminal size or the like. In order to perform the MLO even in such a case, some of the plurality of PHY units mounted on the non-AP MLD 2 are replaced with the simple PHY units having only a simple function such as channel scanning.

The three lower MAC units perform processing for the respective links so that the non-AP MLD 2 can operate by using a maximum of three links. The upper MAC unit performs processing common to the MLD.

In the non-AP MLD 2, the RF units and the PHY unit or the simple PHY units, and the PHY unit or the simple PHY units and the lower MAC units are each connected by switches SW, and the functional blocks to be used changes according to the situation.

With the above configuration, the non-AP MLD 2 can perform the EMLSR operation capable of performing communication by using a plurality of links and transmitting and receiving a plurality of spatially multiplexed streams by using any one of the plurality of links.

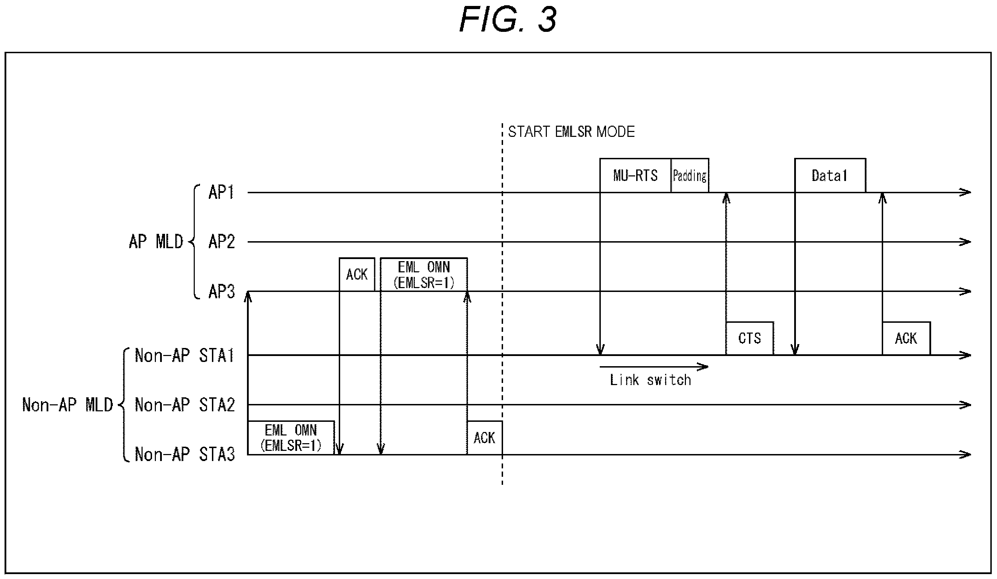

Fig. 3 is a sequence diagram of the EMLSR operation.

Here, a case where an AP 1 belonging to the AP MLD 1 acquires the transmission right prior to an AP 2 and an AP 3 will be described, but a similar sequence is also applied to a case where the AP 2 and the AP 3 belonging to the AP MLD 1 acquires the transmission right prior to other entities.

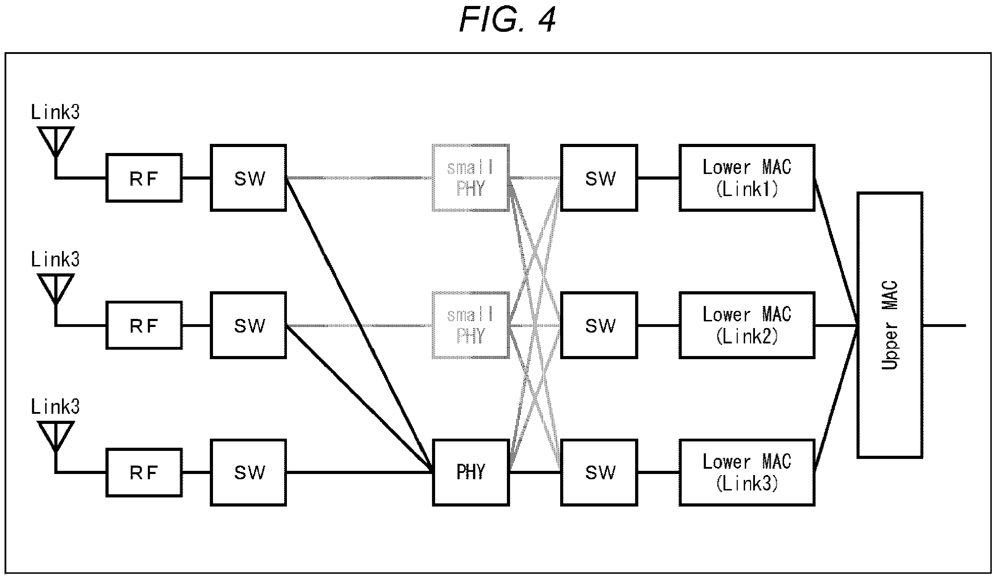

First, at the time of connection with the AP MLD 1, the non-AP MLD 2 exchanges parameters and the like necessary for performing communication with Link 1 to Link 3 by using, for example, an EML operating mode notification (EML OMN) frame. When exchanging the EML OMN frame, the non-AP MLD 2 operates each RF unit at (the frequency of) Link 3, and switches the switches SW such that the lower MAC unit corresponding to Link 3 and the PHY unit, and the PHY unit and each RF unit are connected, as illustrated in Fig. **4****.** Note that the operation of the simple PHY unit is turned off.

As a result, the non-AP MLD 2 can transmit and receive a plurality of spatially multiplexed streams by using only Link 3. Here, Link 3 is an enabled link, and Link 1 and Link 2 are disabled links.

Returning to Fig. 3, the non-AP MLD 2 transmits, to the AP MLD 1 by using Link 3, the EML OMN frame in which the EMLSR mode subfield is set to 1 and there is written that it is desired to perform the EMLSR operation at Link 1 to Link 3.

Note that, hereinafter, an example in which the non-AP MLD 2 designates Link 1 to Link 3 as links (EMLSR links) to be scanned during the EMLSR operation will be described, but for example, only Link 1 and Link 2 may be designated as the EMLSR links. By designating only Link 1 and Link 2 as the EMLSR links, the non-AP MLD 2 can turn off the operation of the PHY unit to reduce power consumption when the channel scanning is performed, and turn on the operation of the PHY unit only when the communication is performed by using one link.

In a case where the AP MLD 1, which has received the EML OMN frame by using Link 3, permits the EMLSR operation, the AP MLD 1 transmits the EML OMN frame in which the EMLSR mode subfield is set to 1 to the non-AP MLD 2 by using Link 3.

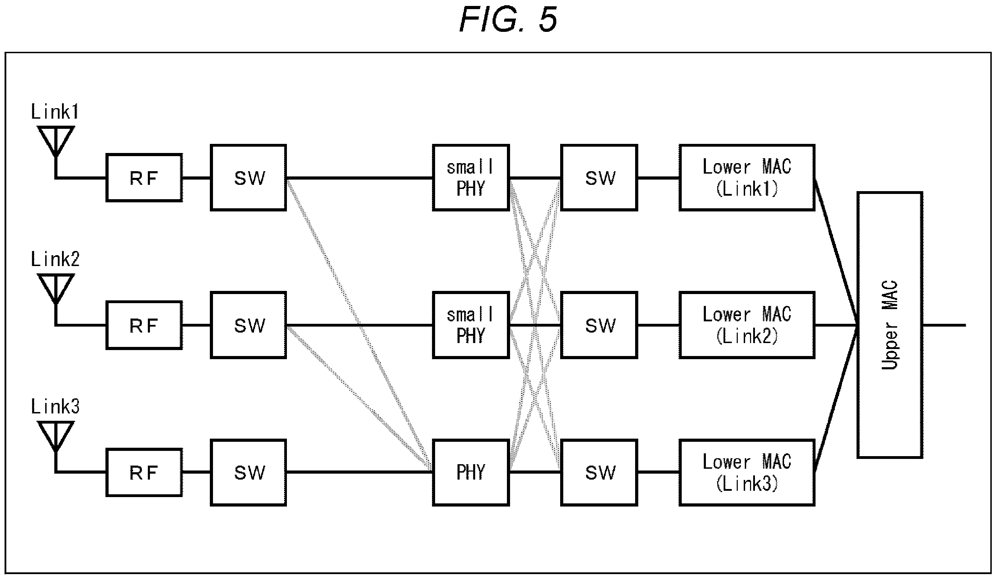

After the exchange of the EML OMN frame ends, the non-AP MLD 2 activates the simple PHY unit and switches the operation frequency of the RF unit operating at Link 3 to Link 1 and to Link 2, as illustrated in Fig. 5, in order to perform the EMLSR operation. Furthermore, the non-AP MLD 2 switches the switches SW such that the RF unit operating at Link 1 and the simple PHY unit, and the simple PHY unit corresponding to Link 1 (and connected to the RF unit operating at Link 1) and the lower MAC unit corresponding to Link 1 are connected, and such that the RF unit operating at Link 2 and the simple PHY unit, and the simple PHY unit corresponding to Link 2 and the lower MAC unit corresponding to Link 2 are connected.

As a result, the non-AP MLD 2 can perform channel scanning at Link 1 to Link 3 and receive the MU-RTS frame or the BSRP trigger frame. Hereinafter, the state of the non-AP MLD 2 illustrated in Fig. 5 is referred to as a multi-link scanning state. By transitioning to the multi-link scanning state, the non-AP MLD 2 starts an EMLSR mode.

Returning to Fig. 3, after the exchange of the EML OMN frame ends, the AP MLD 1 transmits a PHY protocol data unit (PPDU) to the non-AP MLD 2 in the EMLSR mode by using Link 1. In the example of Fig. 3, the MU-RTS frame (or BSRP trigger frame) is transmitted as the PPDU.

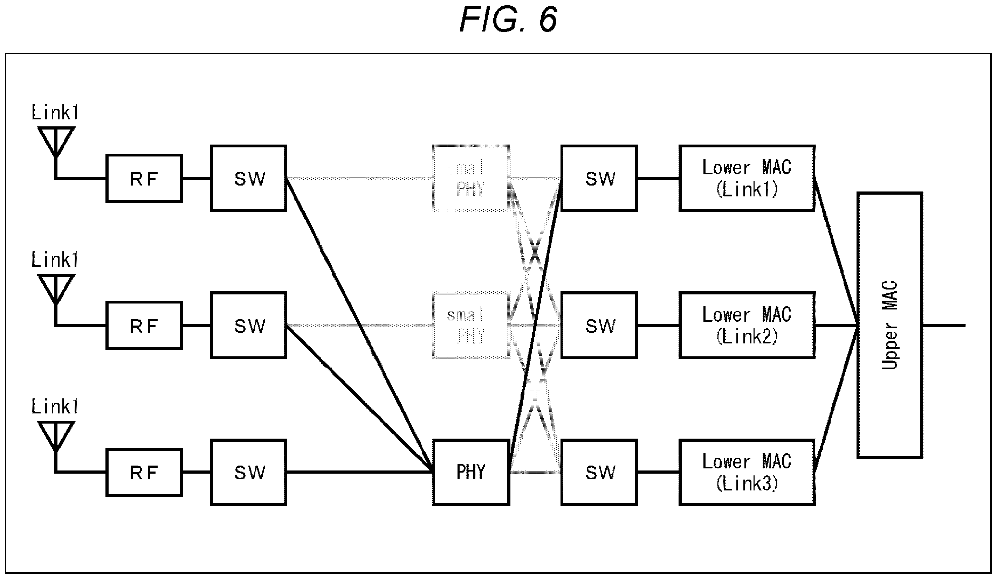

In order to transmit and receive a frame by using Link 1, the non-AP MLD 2, which has received the MU-RTS frame by using Link 1, operates each RF unit at Link 1, and switches the switches SW such that the lower MAC unit corresponding to Link 1 and the PHY unit, and the PHY unit and each RF unit are connected, as illustrated in Fig. 6. Note that the operation of the simple PHY unit is turned off.

As a result, the non-AP MLD 2 can transmit, by using Link 1, a clear to send (CTS) frame or a buffer status report (BSR) frame which is a response to the MU-RTS frame or the BSRP trigger frame. Furthermore, following the transmission of the CTS frame or the BSR frame, the non-AP MLD 2 can receive one stream or a plurality of spatially multiplexed streams transmitted from the AP MLD 1, and can transmit one stream or a plurality of spatially multiplexed streams to the AP MLD **1.** Hereinafter, the state of the non-AP MLD 2 illustrated in Fig. 6 is referred to as a single-link transmission/reception state.

Returning to Fig. 3, after the transition to the single-link transmission/reception state is completed, the non-AP MLD 2 transmits the CTS frame (or BSR frame) to the AP MLD 1 by using Link **1.** Note that padding is added to the MU-RTS frame transmitted by the AP MLD 1 so that the non-AP MLD 2 can transmit the CTS frame after the transition to the single-link transmission/reception state is completed.

The AP MLD 1, which has received the CTS frame by using Link 1, transmits a data frame of Data 1 to the non-AP MLD 1 by using Link 1. The data frame of Data 1 is transmitted by using, for example, one stream or a plurality of spatially multiplexed streams.

The non-AP MLD 2, which has received the data frame of Data 1 by using Link 1, transmits an ACK frame to the AP MLD 1 by using Link 1.

When the transmission and reception of the data frame with the AP MLD 2 ends, the non-AP MLD 2 transitions to the multi-link scanning state in order to perform channel scanning of each link. Note that the AP MLD 1 waits without transmitting the MU-RTS frame in a period in which the non-AP MLD 2 transitions from the single-link transmission/reception state to the multi-link scanning state.

### -EMLMR operation

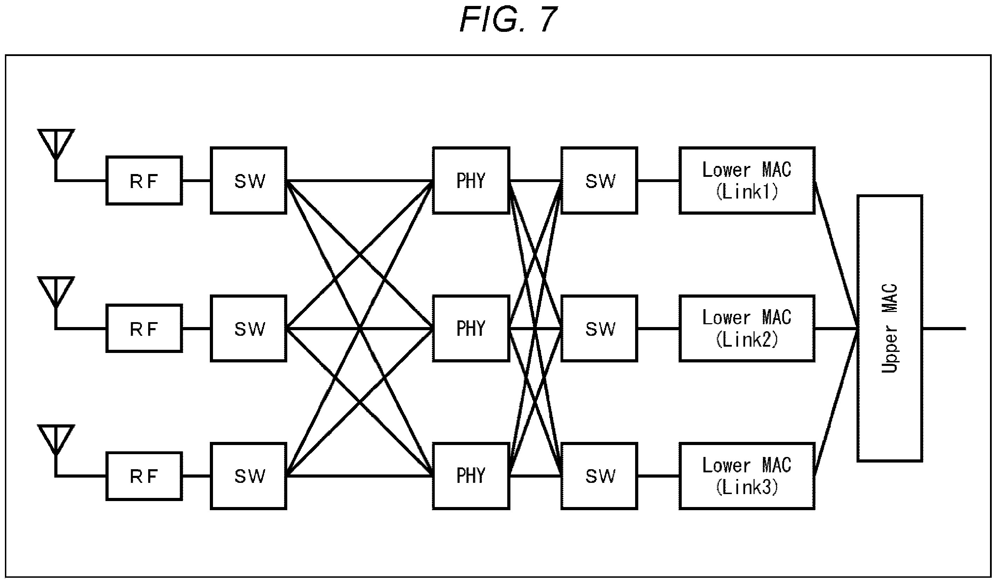

Fig. 7 is a diagram schematically illustrating another configuration example of the non-AP MLD 2.

The configuration of the non-AP MLD 2 in Fig. 7 is different from the configuration in Fig. 2 in that two PHY units are provided instead of two simple PHY units.

In the non-AP MLD 2 of Fig. 7, the RF units and the PHY units, and the PHY units and the lower MAC units are each connected by the switches SW, and the functional blocks to be used change according to the situation.

Even in the configuration including the plurality of PHY units without the simple PHY unit as described above, the non-AP MLD 2 can perform the EMLMR operation capable of dynamically changing the number of streams transmitted and received by using each link.

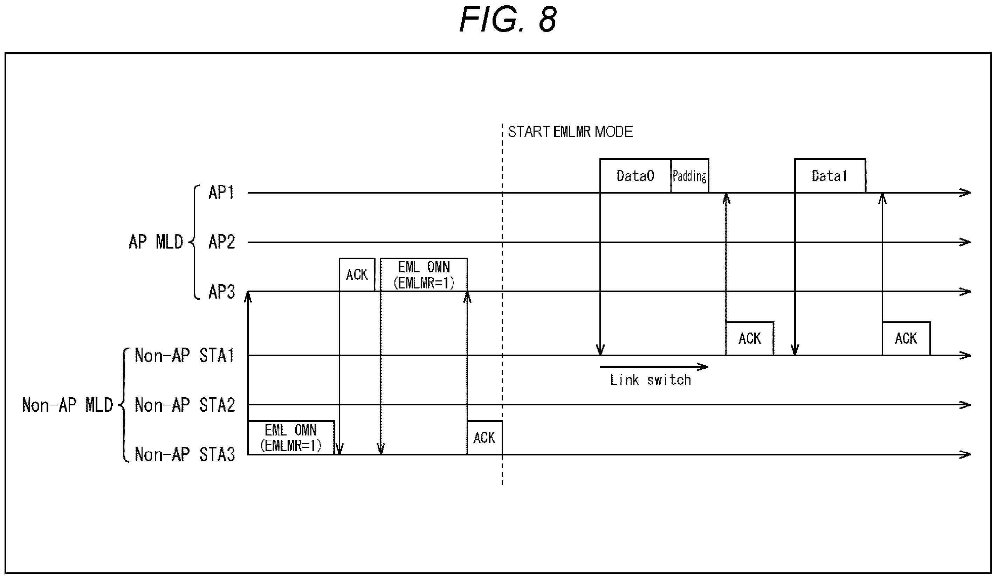

Fig. 8 is a sequence diagram of the EMLMR operation.

Here, a case where an AP 1 belonging to the AP MLD 1 acquires the transmission right prior to an AP 2 and an AP 3 will be described, but a similar sequence is also applied to a case where the AP 2 and the AP 3 belonging to the AP MLD 1 acquires the transmission right prior to other entities.

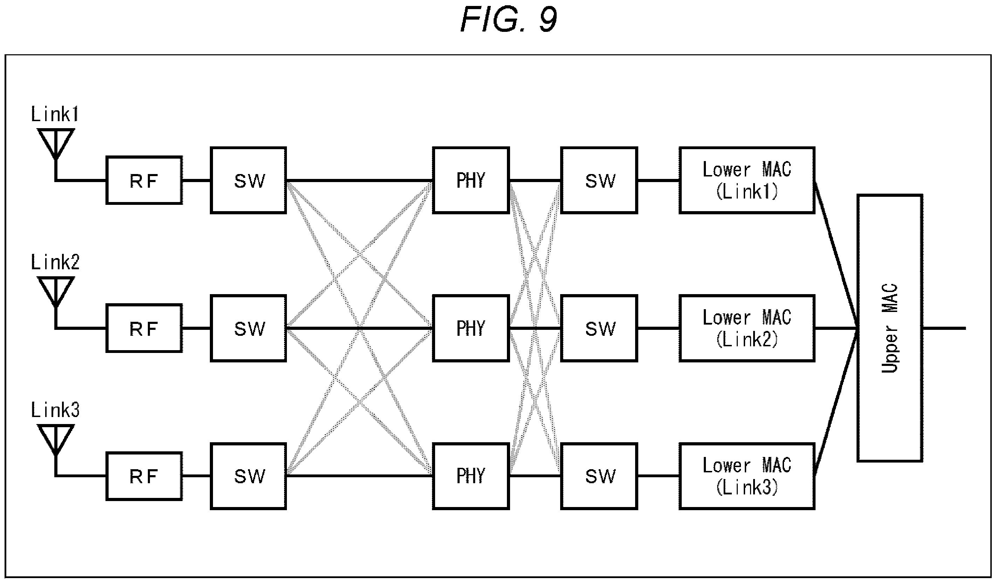

First, when the EML OMN frame is exchanged, the non-AP MLD 2 operates the three RF units at respective one of Link 1 to Link 3 as illustrated in Fig. 9. In addition, the non-AP MLD 2 switches the switches SW such that the RF unit operating at Link 1 and the PHY unit, and the PHY unit corresponding to Link 1 and the lower MAC unit corresponding to Link 1 are connected, the RF unit operating at Link 2 and the PHY unit, and the PHY unit corresponding to Link 2 and the lower MAC unit corresponding to Link 2 are connected, and the RF unit operating at Link 3 and the PHY unit, and the PHY unit corresponding to Link 3 and the lower MAC unit corresponding to Link 3 are connected.

Since the same number of PHY units as the number of links used for communication are provided, the non-AP MLD 2 can transmit and receive the data frame by one stream by using each link in the state illustrated in **Fig. 9****.** Hereinafter, the state of the non-AP MLD 2 illustrated in **Fig.** 9 is referred to as a multi-link operation state.

Returning to Fig. 8, the non-AP MLD 2 transmits, for example, to the AP MLD 1 by using Link 3, the EML OMN frame in which the EMLMR mode subfield is set to 1 and there is written that it is desired to perform the EMLMR operation at Link 1 to Link 3.

In a case where the AP MLD 1, which has received the EML OMN frame by using Link 3, permits the EMLMR operation, the AP MLD 1 transmits the EML OMN frame in which the EMLMR mode subfield is set to 1 to the non-AP MLD 2 by using Link 3.

After the exchange of the EML OMN frame ends, the non-AP MLD 2 starts the EMLMR mode. The AP MLD 1 transmits the PPDU to the non-AP MLD 2 in the EMLMR mode by using Link 1 After the EML OMN frame is exchanged, in the EMLSR operation, the MU-RTS frame and the BSRP trigger frame are transmitted by the AP MLD 1, but in the EMLMR operation, the data frame may be transmitted as the PPDU. In the example of Fig. 8, a data frame of Data 0 is transmitted as the PPDU.

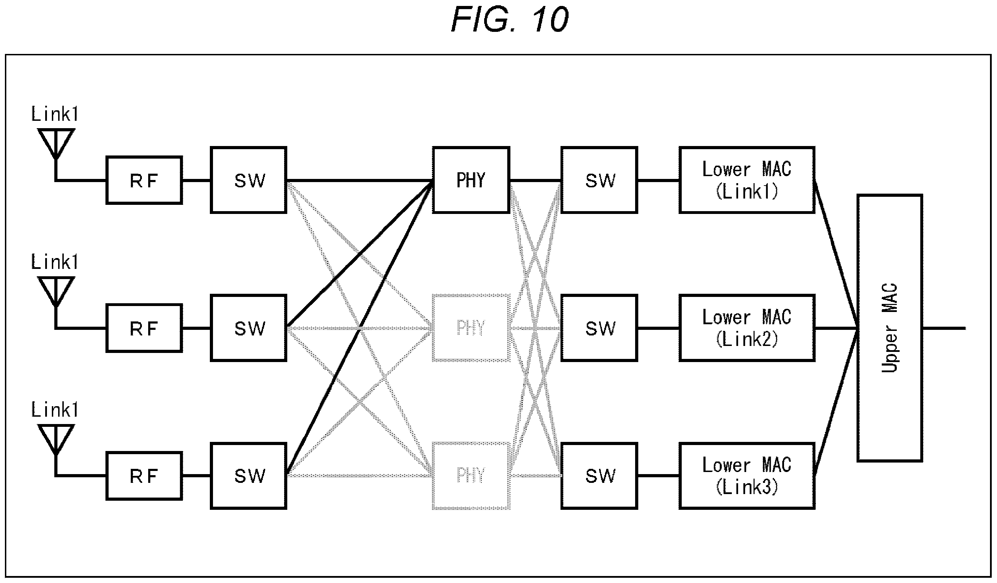

The non-AP MLD 2, which has received the data frame of Data 0 by using Link 1, operates each RF unit at Link 1, and switches the switches SW such that the lower MAC unit corresponding to Link 1 and one PHY unit, and the PHY unit and each RF unit are connected, as illustrated in Fig. 10.

As a result, the non-AP MLD 2 can transmit and receive a plurality of spatially multiplexed streams by using Link 1. Hereinafter, the state of the non-AP MLD 2 illustrated in Fig. 10 is referred to as a single-link operation state.

Note that, in order to reduce power consumption, the operation of the PHY unit not connected to the RF unit may be turned off in the single-link operation state, and the PHY unit not connected to the RF unit may be activated when the non-AP MLD 2 transitions to the multi-link operation state again.

Returning to Fig. 8, after the transition to the single-link operation state is completed, the non-AP MLD 2 transmits an ACK frame to the AP MLD 1 by using Link 1. Note that padding is also added to the data frame of Data 0 transmitted by the AP MLD 1 so that the non-AP MLD 2 can transmit the ACK frame after the transition to the single-link transmission/reception state is completed.

The AP MLD 1, which has received the ACK frame by using Link 1, transmits the data frame of Data 1 to the non-AP MLD 1 by using Link 1. The data frame of Data 1 is transmitted by using, for example, one stream or a plurality of spatially multiplexed streams.

The non-AP MLD 2, which has received the data frame of Data 1 by using Link 1, transmits an ACK frame to the AP MLD 1 by using Link 1.

When the transmission and reception of the data with the AP MLD2 ends, the non-AP MLD 2 transitions to the multi-link operation state in order to perform channel scanning of each link. Note that the AP MLD 1 waits without transmitting the PPDU in a period in which the non-AP MLD 2 transitions from the single-link operation state to the multi-link operation state.

### -Issue

During the EMLSR operation or the EMLMR operation, as described above, the non-AP MLD 2 transitions from the multi-link state (multi-link scanning state or multi-link operation state) in which communication is performed by using a plurality of links to the single-link state (single-link transmission/reception state or single-link operation state) in which a plurality of streams is transmitted and received by using any one of the plurality of links. If the AP MLD transmits a frame to the non-AP MLD before the state transition is completed in the non-AP MLD **2,** the non-AP MLD may fail to receive the frame.

Therefore, as disclosed in Non-Patent Document 1, the non-AP MLD 2 notifies the AP MLD 1 of EMLSR padding delay and EMLSR transition delay, and the AP MLD 1 needs to wait to transmit the frame to the non-AP MLD 2 in a period in which the non-AP MLD 2 transitions from the multi-link state to the single-link state.

By the way, the transition time required for the non-AP MLD 2 to transition the state is determined on the basis of the switching time of the operation frequency of the RF unit, the switching time of the connection destination of each of the RF unit, the PHY unit, the simple PHY unit, and the lower MAC unit, and the time required to turn on/off the PHY unit and the simple PHY unit.

The switching time of the operation frequency of the RF unit varies depending on the operation frequency before switching and the operation frequency after switching. The time required to turn on/off the simple PHY unit and the PHY unit varies depending on the number of the simple PHY units and the PHY units activated in the multi-link state. Therefore, the transition time required for the non-AP MLD 2 to transition from the multi-link state to the single-link state varies depending on the operation frequency of the non-AP MLD 2 and the like.

In the notification method disclosed in Non-Patent Document 1, since only the maximum value of the transition time required to transition the states is notified to the AP MLD 1, the AP MLD 1 waits to transmit the frame even though the state transition is completed in the non-AP MLD 2, and thus there is a possibility that communication efficiency during the EMLSR operation reduces.

Therefore, in the present technology, information regarding the transition time for each link required for the non-AP MLD 2 to transition from the multi-link state to the single-link state is notified to the AP MLD 1, and the link for frame transmission during the EMLSR operation is determined on the basis of the information, and thus communication efficiency is improved.

### <2. Configuration and Operation of Each Device>

### -Configuration of AP MLD 1

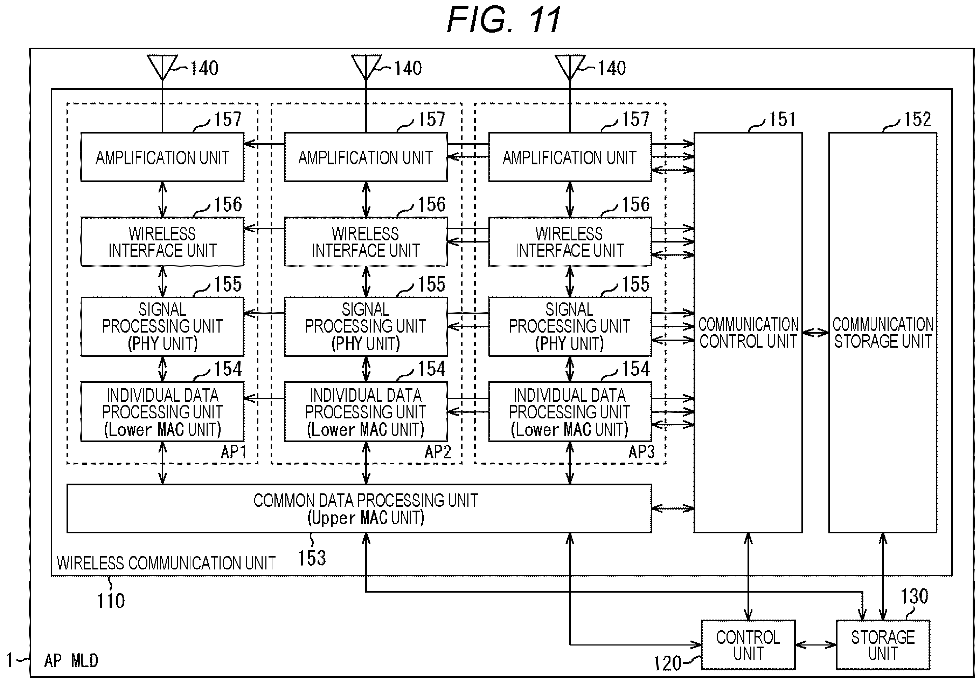

Fig.11 is a block diagram illustrating a functional configuration example of the AP MLD 1.

As illustrated in Fig. 11, the AP MLD 1 includes a wireless communication unit 110, a control unit 120, a storage unit 130, and antennas 140.

The wireless communication unit 110 includes a communication control unit 151, a communication storage unit 152, a common data processing unit 153, individual data processing units 154, signal processing units 155, wireless interface units 156, and amplification units 157.

The wireless communication unit 110 has functional blocks subsequent to the individual data processing units 154 for each link, and for example, functional blocks at the left side of the drawing operate as the AP **1,** functional blocks at the center of the drawing operate as the AP **2,** and functional blocks at the right side of the drawing operate as the AP **3.** One set including the wireless interface unit 156, the amplification unit 157, and the antenna 140 may operate as one AP belonging to the AP MLD 1.

The communication control unit 151 controls operation of each unit of the wireless communication unit 110 and information transmission between the units. Furthermore, the communication control unit 151 controls transfer of control information and management information to be notified to other communication apparatuses to each processing unit. In particular, in the present technology, the communication control unit 151 receives information regarding the transition time for each link transmitted from the non-AP MLD **2,** and controls each processing unit for determining a link for frame transmission on the basis of the information.

The communication storage unit 152 holds various types of information used by the communication control unit 151.

At the time of data transmission, the common data processing unit 153 performs sequence management of data held in the communication storage unit 152 and the control information and the management information received from the communication control unit 151, and performs encryption processing and the like. Thereafter, the common data processing unit 153 transfers a temporary data unit to the individual data processing unit 154 of any AP from among the AP 1 to AP 3 that has acquired the transmission right. At the time of data reception, the common data processing unit 153 performs decrypting processing and reordering processing of the temporary data unit received from the individual data processing unit 154. The common data processing unit 153 is also referred to as the upper MAC unit.

At the time of data transmission, the individual data processing unit 154 performs a channel access operation based on carrier sensing. In addition, at the time of data transmission, the individual data processing unit 154 adds a media access control (MAC) header and an error detection code to the temporary data unit received from the common data processing unit 153, and performs coupling processing of a plurality of data units. At the time of data reception, the individual data processing unit 154 performs decoupling of the received data unit, analysis of the MAC header, and error detection, and transfers the data unit to the common data processing unit 153. In addition, at the time of data reception, the individual data processing unit 154 performs a retransmission request operation. The individual data processing unit 154 is also referred to as the lower MAC unit.

Note that the function of the individual data processing unit 154 that performs processing necessary for communication in a single frequency band and the function of the common data processing unit 153 that performs processing common to communication in a plurality of frequency bands may be realized by one data processing unit.

The signal processing unit 155 includes a transmission signal processing unit and a reception signal processing unit. The transmission signal processing unit performs encoding, interleaving, modulation, and the like on the data unit and adds a physical header to generate a symbol stream. The reception signal processing unit analyzes the physical header and performs demodulation, deinterleaving, decoding, and the like on the symbol stream to generate a data unit. At this time, the reception signal processing unit performs complex channel characteristic estimation and spatial separation processing as necessary. The signal processing unit 155 is also referred to as the PHY unit.

Note that the individual data processing unit 154 and the signal processing unit 155 may be set as one set for each block surrounded by a broken line, and two or more of these sets may be connected to one wireless interface unit 156.

The wireless interface unit 156 includes a transmission wireless interface unit and a reception wireless interface unit. The transmission wireless interface unit performs digital-analog signal conversion, filtering, up-conversion, and phase control on the symbol stream to generate a transmission signal. The reception wireless interface unit performs down-conversion, filtering, and analog-digital signal conversion on a reception signal to generate the symbol stream.

The amplification unit 157 includes a transmission amplification unit and a reception amplification unit. The transmission amplification unit amplifies the signal input from the wireless interface unit 156, and the reception amplification unit amplifies the signal input from the antenna 140. A part of the amplification unit 157 may be configured outside the wireless communication unit 110, or a part thereof may be included in the wireless interface unit 156.

Hereinafter, the wireless interface unit 156 and the amplification unit 157 are collectively referred to as the RF unit.

The control unit 120 controls the entire wireless communication unit 110 and the communication control unit 151. The control unit 120 may perform a part of the processing performed by the communication control unit 151. Furthermore, the control unit 120 and the communication control unit 151 may be integrally configured.

The storage unit 130 holds information used by the wireless communication unit 110 and the control unit 120. The storage unit 130 may perform a part of the processing performed by the communication storage unit 152. Furthermore, the storage unit 130 and the communication storage unit 152 may be integrally configured.

Note that the wireless communication unit 110 is realized by, for example, one or more large-scale integration (LSI).

The configuration of the wireless communication unit 110 is an example and is not limited to this. For example, there may be a case where the wireless communication unit 110 includes two or four or more APs belonging to the AP MLD 1. In a case where the wireless communication unit 110 includes three or more APs belonging to an AM MLD1, some of the plurality of APs may share the same antenna 140 via a frequency division unit.

### -Configuration of non-AP MLD 2 (compatible with EMLSR operation)

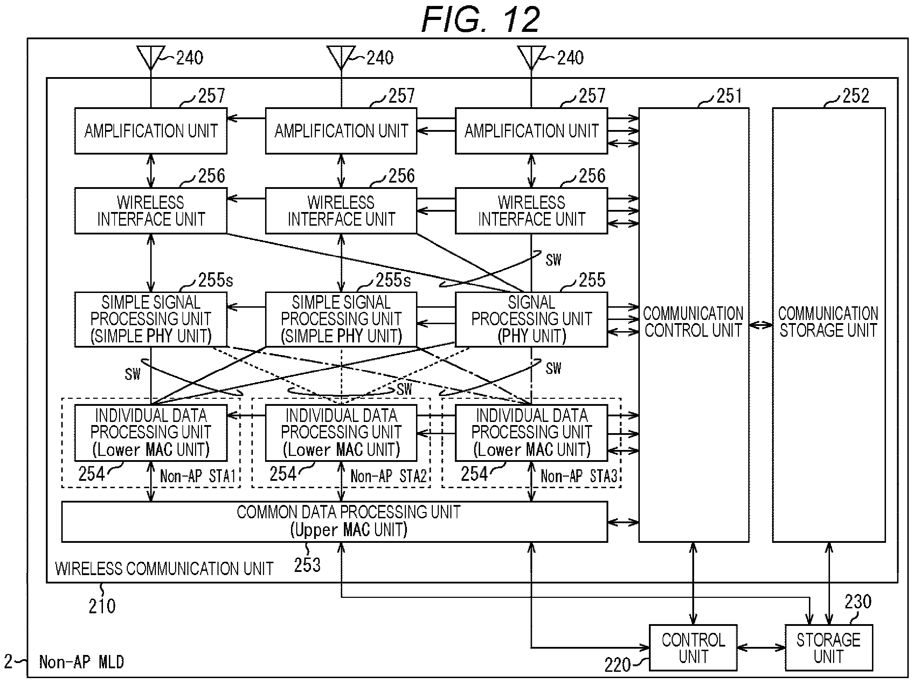

Fig. 12 is a block diagram illustrating a functional configuration example of the non-AP MLD 2 compatible with the EMLSR operation.

The non-AP MLD 2 includes a wireless communication unit 210, a control unit 220, a storage unit 230, and antennas 240.

The wireless communication unit 210 includes a communication control unit 251, a communication storage unit 252, a common data processing unit 253, individual data processing units 254, a signal processing unit 255, wireless interface units 256, and amplification units 257.

The wireless communication unit 210 includes an individual data processing unit 254 for each link. The individual data processing unit 254 at the left side of the drawing operates as the non-AP STA **1,** the individual data processing unit 254 at the center of the drawing operates as the non-AP STA **2,** and the individual data processing unit 254 at the right side of the drawing operates as the non-AP STA 3.

Each functional block of the wireless communication unit 210 basically has a function similar to the corresponding functional block of the wireless communication unit 110 (Fig. 11) of the AP MLD 1. However, the wireless communication unit 210 is different from the wireless communication unit 110 of the AP MLD 1 in including only one signal processing unit 255 and two simple signal processing units 255s.

The simple signal processing units 255s can perform processing similar to the signal processing unit 255, but has a limited function as compared with the signal processing unit 255. For example, the simple signal processing units 255s support only a part of the modulation scheme or a frame format supported by the signal processing unit 255 as a usable modulation scheme or a transmittable/receivable frame format.

On the other hand, since the processing capability of the simple signal processing units 255s as functional blocks is reduced, there is also an advantage that implementation is facilitated and power consumption can be suppressed. In a wireless communication terminal such as a small terminal in which it is difficult to implement a plurality of signal processing units, it is expected that a simple signal processing unit is implemented instead of the signal processing unit as in the non-AP MLD 2 in Fig. 12. The simple signal processing unit 255s is also referred to as the small PHY unit or the simple PHY unit.

The switches SW are provided between the individual data processing units 254 and the signal processing unit 255 and the simple signal processing units 255s, and between the signal processing unit 255 and the simple signal processing units 255s and the wireless interface units 256. The non-AP MLD 2 determines which functional block is used in which link at the time of state transition, and switches the switches SW.

In the present technology, the communication control unit 251 controls each processing unit for notifying the AP MLD 1 of (transmitting to the AP MLD 1) information regarding the transition time for each link in the own terminal. The transition time for each link is calculated on the basis of at least one of the switching time of the operation frequency of the RF units, the switching time of the connection destination of each of the RF units, the PHY unit, the simple PHY units, and the lower MAC units, and the activation time of the signal processing unit 255 and the simple signal processing units 255s, for example.

Note that the functions of the control unit 220, the storage unit 230, and the antennas 240 in Fig. 12 are basically similar to the functions of the control unit 120, the storage unit 130, and the antennas 140 in Fig. 2, and thus, description thereof is omitted.

### -Configuration of non-AP MLD 2 (compatible with EMLMR operation)

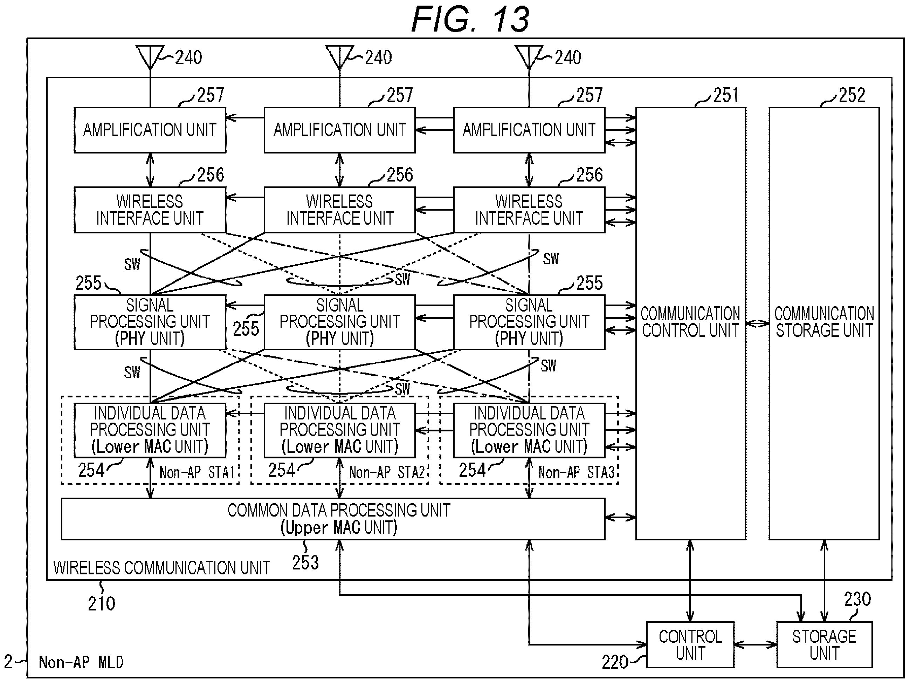

Fig. 13 is a block diagram illustrating a functional configuration example of the non-AP MLD 2 compatible with the EMLMR operation. In Fig. 13, the same components as the components in Fig. 12 are denoted by the same reference signs. Redundant description is omitted as appropriate.

The wireless communication unit 210 of Fig. 13 is different from the wireless communication unit 210 of Fig. 12 in not including the simple signal processing unit 255s but including three signal processing units 255.

The switches SW are provided between the individual data processing units 254 and the signal processing units 255 and between the signal processing units 255 and the wireless interface units 256. The non-AP MLD 2 determines which functional block is used in which link at the time of state transition, and switches the switches SW.

### -Operation of non-AP MLD 2

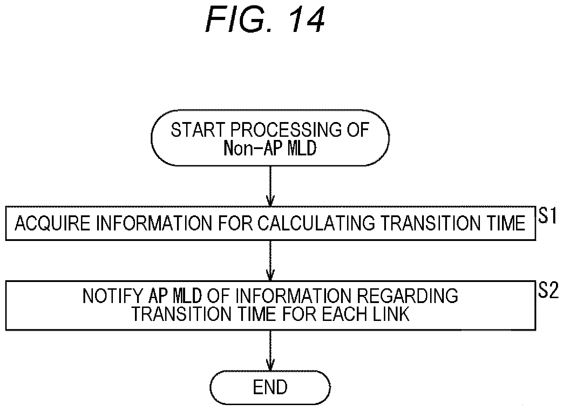

With reference to a flowchart of Fig. 14, a flow of an operation in which the non-AP MLD 2 notifies the AP MLD 1 of information regarding a transition time of states in the own terminal will be described.

In step S1, the wireless communication unit 210 (communication control unit 251) acquires information for calculating the transition time for each link in the own terminal. As the information for calculating the transition time for each link, for example, the switching time of the operation frequency of each RF unit, the switching time of the connection destination of each of the RF units, the simple PHY units, the PHY units, and the lower MAC units, and the activation time of the simple PHY units and the PHY unit are acquired.

In step S2, the wireless communication unit 210 notifies the AP MLD 1 of (transmits to the AP MLD 1) the information regarding the transition time for each link in the own terminal.

In a case where the non-AP MLD 2 is compatible with the EMLSR operation, the information regarding the transition time for each link includes, for example, at least one piece of information for identifying the link before the transition and the link after the transition, information regarding a first transition time required to transition from the multi-link scanning state to the single-link transmission/reception state of each link, and information regarding a second transition time required to transition from the single-link transmission/reception state of each link to the multi-link scanning state.

In a case where the non-AP MLD 2 is compatible with the EMLMR operation, the information regarding the transition time for each link includes at least one piece of information for identifying the link before the transition and the link after the transition, information regarding a first transition time required to transition from the multi-link operation state to the single-link operation state of each link, and information regarding a second transition time required to transition from the single-link operation state of each link to the multi-link operation state.

In a case where the non-AP MLD 2 can simultaneously execute switching of the operation frequency of each RF unit, switching of the switches SW, and activation of the simple PHY units and the PHY unit, the first transition time and the second transition time are the maximum time from among the switching time of the operation frequency of each RF unit, the switching time of the connection destination of each of the RF units, the PHY unit, the simple PHY units, and the lower MAC units, and the activation time of the simple PHY units and the PHY unit.

In a case where the non-AP MLD 2 cannot simultaneously execute switching of the operation frequency of each RF unit, switching of the switches SW, and activation of the simple PHY units and the PHY unit, the first transition time and the second transition time are the total time of the switching time of the operation frequency of each RF unit, the switching time of the connection destination of each of the RF units, the PHY unit, the simple PHY units, and the lower MAC unit, and the activation time of the simple PHY units and the PHY unit.

The information regarding the transition time for each link is notified to the AP MLD 1 by using, for example, Multi-link Element.

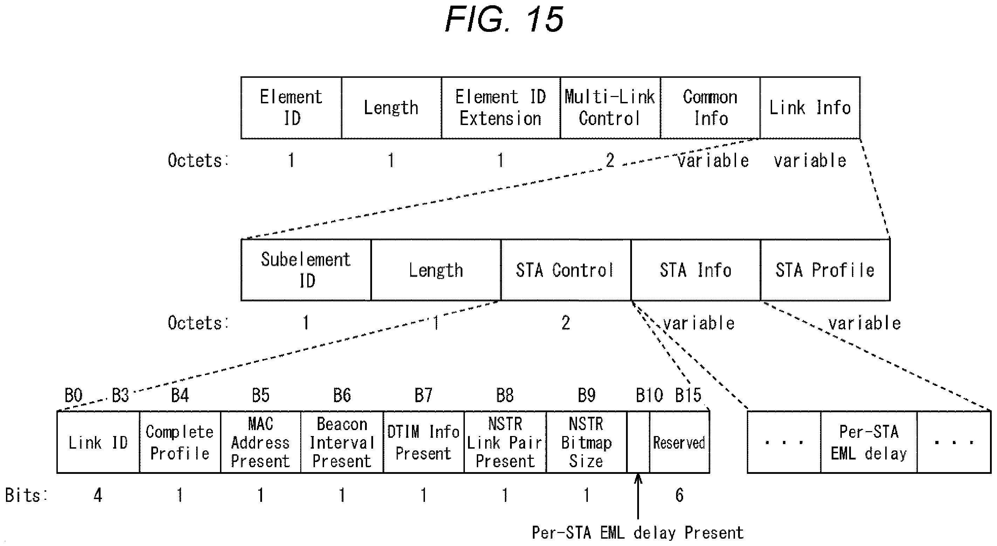

Fig. 15 is a diagram illustrating an example of a configuration example of the Multi-link Element.

As indicated at the upper part of Fig. 15, the Multi-link Element includes Element ID, Length, Element ID Extension, Multi-Link Control, Common Info, and Link Info.

The Element ID is information indicating the type of the Element. In the present embodiment, an identifier indicating the Multi-link Element is described.

The Length is information indicating the length of the Element.

The Element ID Extension is information indicating the type of the Element added to the Element ID.

The Multi-Link Control is information indicating the type of the Multi-link Element and information indicating what kind of information is written in the Common Info field.

The Common Info is information commonly used in each link in the MLD.

The Link Info is information different for each link, and includes one or more subelements.

As indicated at the center of Fig. 15, the subelement of the Link Info includes Subelement ID, Length, STA Control, STA Info, and STA Profile.

The Subelement ID is information indicating the type of the subelement.

The Length is information indicating the length of the subelement.

The STA Control is information indicating Link ID for identifying a link and information indicating what kind of information is written in the STA Info.

As indicated at the lower part of Fig. 15, the STA Control includes Link ID, Complete Profile, MAC Address Present, Beacon Interval Present, DTIM Info Present, NSTR Link Pair Present, NSTR Bitmap Size, Per-STA EML delay Present, and Reserved.

The Link ID is information for identifying a link.

The Complete Profile is information indicating that all information that may be written is described in the STA Info.

The MAC Address Present, the Beacon Interval Present, the DTIM Info Present, and the NSTR Link Pair Present are information indicating that the MAC Address, the Beacon Interval, the DTIM Info, and the NSTR Link Pair are written in the STA Info.

The NSTR Bitmap Size is information indicating the length of Bitmap for indicating the NSTR Link Pair.

The Per-STA EML delay Present is information indicating that the information regarding the transition time for each link is written in the STA Info.

The Reserved may include arbitrary information.

The STA Info in the subelement of the Link Info is information for each link. As indicated at the lower part of Fig. 15, the STA Info includes the Per-STA EML delay.

The Per-STA EML delay is information regarding the transition time for each link in the EML mode (EMLSR mode or EMLMR mode).

As the Per-STA EML delay, a pair of information indicating a link before transition and information regarding a transition time to each link may be written. As the Per-STA EML delay, each of information regarding the transition time for each link in the EMLSR mode and information regarding the transition time for each link in the EMLMR mode may be written. As the Per-STA EML delay, information indicating whether or not to operate the PHY unit when channel scanning is performed may be written, and information regarding the transition time for each link in each case of operating the PHY unit and not operating the PHY unit may be written.

The STA Profile in the subelement of the Link Info is information other than the Subelement ID, the Length, the STA Control, and the STA Info. For example, the STA Profile is information indicating an EDCA parameter.

Note that the method of notifying the information regarding the transition time for each link is not limited to the method using the Multi-link Element, and a newly defined frame may be used for notifying the information regarding the transition time for each link. Furthermore, the information regarding the transition time for each link may be written in any of the field, element, and subelement newly defined in the EML OMN frame. The information regarding the transition time for each link may be divided into a plurality of frames and notified.

### -Operation of AP MLD 1

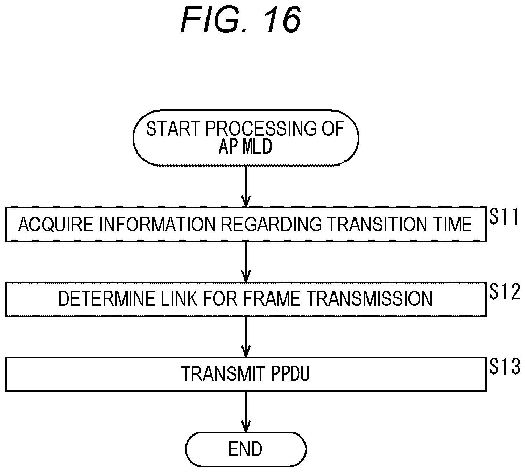

Next, with reference to a flowchart of Fig. 16, a flow of an operation in which the AP MLD 1 determines a link for frame transmission will be described.

In step S11, the wireless communication unit 110 (communication control unit 151) acquires information regarding the transition time for each link in the non-AP MLD **2.** In addition, the wireless communication unit 110 acquires information regarding the numbers of the simple PHY unit and the PHY unit provided in the non-AP MLD **2.** The numbers of the simple PHY unit and the PHY unit are written in, for example, the Multi-link Element or the EML OMN frame.

In step S12, the wireless communication unit 110 determines a link for frame transmission to the non-AP MLD 2 on the basis of the transmission waiting time (backoff time) for each link for transmitting a frame and the information regarding the transition time for each link in the non-AP MLD 2.

Specifically, in a case where the EMLSR operation is performed, the wireless communication unit 110 determines a link that makes the total time of the transmission waiting time of each link and the first transition time required for the non-AP MLD 2 to transition from the multi-link scanning state to the single-link transmission/reception state the shortest as a link for transmission of the MU-RTS frame or the BSRP trigger frame.

In a case where the EMLMR operation is performed, the wireless communication unit 110 determines a link that makes the total time of the transmission waiting time of each link and the first transition time required for the non-AP MLD 2 to transition from the multi-link operation state to the single-link operation state the shortest as a link for transmission of the PPDU.

Furthermore, in step S12, the wireless communication unit 110 determines the length of padding added to the PPDU on the basis of the information regarding the first transition time for each link.

In step S13, the wireless communication unit 110 transmits the PPDU to the non-AP MLD 2. Here, in a case where the EMLSR operation is performed, the wireless communication unit 110 transmits the PPDU including the MU-RTS frame or the BSRP trigger frame. In a case where the EMLMR operation is performed, the wireless communication unit 110 transmits, for example, the PPDU including a data frame.

In the PPDU transmitted to the non-AP MLD 2, padding having a length according to the transition time to the single-link transmission/reception state corresponding to the link for frame transmission is added so that the CTS frame or the BSR frame (or the ACK frame) can be transmitted after the non-AP MLD 2 transitions to the single-link transmission/reception state (or the single-link operation state) corresponding to the link for frame transmission.

According to the above configuration and processing, during the execution of the EMLSR operation or the EMLMR operation, the AP MLD 1 can determine the link that makes the time for waiting the non-AP MLD 2 to transition from the multi-link state to the single-link state the shortest as the link for frame transmission, so that it is possible to reduce the waiting time of the AP MLD 1. In addition, it is possible to optimize the waiting time of the AP MLD 1 by adding, to the PPDU, padding having a length corresponding to the transition time to the single-link transmission/reception state corresponding to the link for frame transmission.

By reducing and optimizing the waiting time of the AP MLD 1, it is possible to improve communication efficiency during the EMLSR operation or the EMLMR operation.

### <3. First Embodiment (Example of EMLSR operation)>

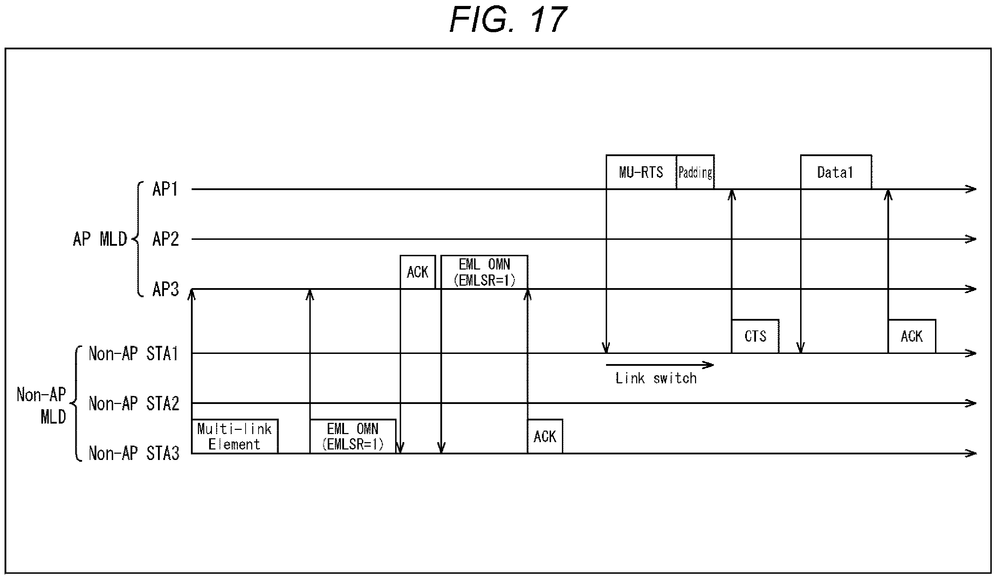

Fig. 17 is a sequence diagram of an EMLSR operation by the wireless communication system of the present technology.

In the present embodiment, it is assumed that a non-AP MLD 2 is in a single-link transmission/reception state of Link 3 (Fig. 4) when it is not in an EMLSR mode.

First, the non-AP MLD 2 writes, in a Multi-link Element, information regarding a first transition time required to transition from a multi-link scanning state to the single-link transmission/reception state of each link and information regarding a second transition time required to transition from the single-link transmission/reception state of each link to the multi-link scanning state.

In the Multi-link Element, as information regarding the first transition time for each link, six pieces of information regarding the transition time at the time of transition from Link 1 to link 2, from Link 1 to Link 3, from Link 2 to Link 1, from Link 2 to Link 3, from Link 3 to Link 1, and from Link 3 to Link 2 are written. For example, the transition time required to transition from a state where the non-AP MLD 2 can scan Link 1 to a single-link transmission/reception state of Link 2 is calculated on the basis of the time for switching the operation frequency of an RF unit from Link 1 to Link 2, the time for switching the connection destination of the RF unit from a simple PHY unit to a PHY unit, and the time for switching the connection destination of the PHY unit to a lower MAC unit corresponding to Link 2.

In the Multi-link Element, as information regarding the second transition time for each link, six pieces of information regarding the transition time at the time of transition from Link 1 to link 2, from Link 1 to Link 3, from Link 2 to Link 1, from Link 2 to Link 3, from Link 3 to Link 1, and from Link 3 to Link 2 are written. For example, the transition time required to transition from a single-link transmission/reception state of Link 3 to a state where the non-AP MLD 2 can scan Link 1 is calculated on the basis of the time for switching the operation frequency of the RF unit from Link 3 to Link 1, the time for activating the simple PHY unit, the time for switching the connection destination of the RF unit from the PHY unit to the simple PHY unit, and the time for switching the connection destination of the simple PHY unit to the lower MAC unit corresponding to Link 1.

Next, the non-AP MLD 2 transmits the Multi-link Element to an AP MLD 1 by using Link **3.**

Next, the non-AP MLD 2 transmits, to the AP MLD 1 by using Link 3, an EML OMN frame in which an EMLSR mode subfield is set to 1 and which designates Link 1 to Link 3 as EMLSR links.

The AP MLD 1, which has received the EML OMN frame, returns the EML OMN frame in which the EMLSR mode subfield is set to 1 to the non-AP MLD 2 by using Link 3.

The non-AP MLD 2, which has received the EML OMN frame, transitions from the single-link transmission/reception state (Fig. 4) to the multi-link scanning state (Fig. 5), and starts channel scanning in Link 1 to Link 3 by using at least one of the PHY unit and the simple PHY units and reception awaiting of an MU-RTS frame (BSRP Trigger frame). Specifically, the operation frequency of each RF unit is switched to Link 1 to Link 3, and each simple PHY unit is activated. Furthermore, the connection destination of each of each RF unit, each simple PHY unit, the PHY unit, and each lower MAC unit is switched.

Note that it is also possible for the AP MLD 1 or the non-AP MLD 2 to determine links (EMLSR links) to be scanned during the EMLSR operation on the basis of the information regarding the transition time required for the non-AP MLD 2 to transition from the multi-link scanning state to the single-link transmission/reception state of each link and the information regarding the transition time required for the non-AP MLD 2 to transition from the single-link transmission/reception state of each link to the multi-link scanning state.

The AP MLD 1 determines a link that enables the non-AP MLD 2 to start the transmission of a data frame of Data 1 the earliest on the basis of the first transition time required for the non-AP MLD 2 to transition from the multi-link scanning state to the single-link transmission/reception state of each link and the transmission waiting time of each link.

In the example of Fig. 17, the AP MLD 1 determines that Link 1 is the link that enables the non-AP MLD 2 to start the transmission of the data frame of Data 1 the earliest, and transmits a PPDU including the MU-RTS frame to the non-AP MLD 2 by using Link 1. The PPDU including the MU-RTS frame is transmitted with padding added thereto. Note that the padding may be performed by using Padding field in the MU-RTS frame, or may be performed by using Packet Extension when configuring the PPDU.

The non-AP MLD 1, which has received the MU-RTS frame, switches the operation frequency of each RF unit to Link 1 and switches the connection destination of each of each RF unit, the PHY unit, and the lower MAC unit, thereby transitioning from the multi-link scanning state (Fig. 5) to the single-link transmission/reception state of Link 1 (Fig. 6). After the transition to the single-link transmission/reception state is completed, the non-AP MLD 1 transmits a CTS frame to the AP MLD 1 by using Link 1.

The AP MLD 1, which has received the CTS frame, transmits a plurality of spatially multiplexed streams (data frame of Data 1) to the non-AP MLD 2 by using Link 1.

The non-AP MLD 2, which has received the data frame of Data 1, transmits an ACK frame to the AP MLD 1 by using Link 1.

After the exchange of the frame with the AP MLD 1 ends, the non-AP MLD 2 transitions from the single-link transmission/reception state to the multi-link scanning state.

The AP MLD 1 waits so as not to transmit the MU-RTS frame in a period in which the non-AP MLD 2 transitions from the single-link transmission/reception state to the multi-link scanning state on the basis of the information regarding the second transition time for each link.

As described above, during the execution of the EMLSR operation, the AP MLD 1 can determine the link that makes the time for waiting the non-AP MLD 2 to transition from the multi-link scanning state to the single-link transmission/reception state the shortest as the link for transmitting the PPDU, so that it becomes possible to reduce the waiting time of the AP MLD 1 and to improve the communication efficiency.

### <4. Second Embodiment (Example of EMLMR operation)>

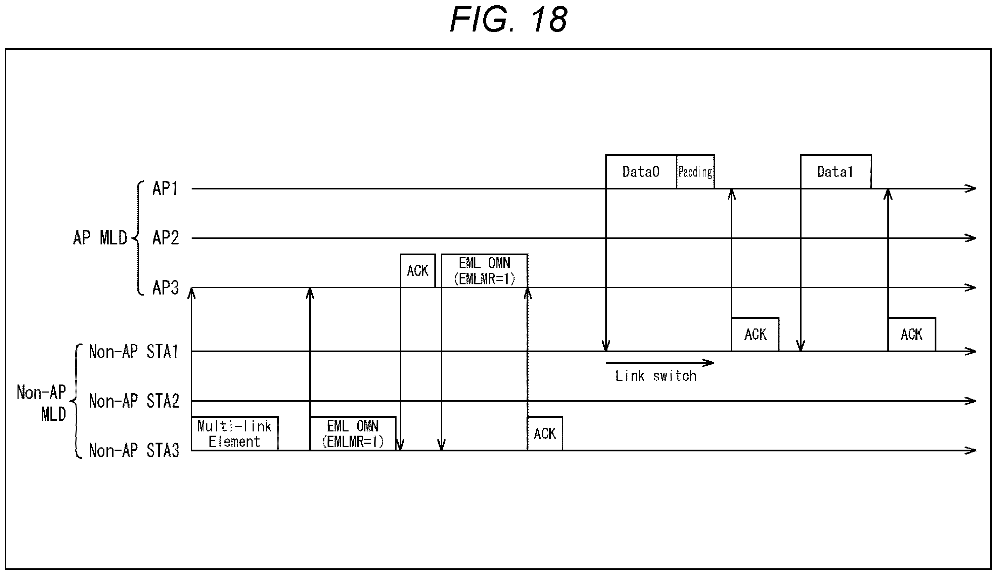

Fig. 18 is a sequence diagram of an EMLMR operation by the wireless communication system of the present technology.

In the present embodiment, it is assumed that a non-AP MLD 2 is in a multi-link operation state (Fig. 9) when it is not in an EMLMR mode.

First, the non-AP MLD 2 writes, in a Multi-link Element, information regarding a second transition time required to transition from the multi-link operation state to a single-link operation state of each link and information regarding a second transition time required to transition from the single-link operation state of each link to the multi-link operation state.

In the Multi-link Element, as information regarding the first transition time for each link, six pieces of information regarding the transition time at the time of transition from Link 1 to link 2, from Link 1 to Link **3,** from Link 2 to Link **1,** from Link 2 to Link **3,** from Link 3 to Link 1, and from Link 3 to Link 2 are written. For example, the transition time required to transition from a state where the non-AP MLD 2 can scan Link 3 to a single-link operation state of Link 2 is calculated on the basis of the time for switching the operation frequency of an RF unit from Link 1 to Link 2, the time for switching the connection destination of the RF unit to one PHY unit, and the time for switching the connection destination of the PHY unit to a lower MAC unit corresponding to Link 2.

In the Multi-link Element, as information regarding the second transition time for each link, six pieces of information regarding the transition time at the time of transition from Link 1 to link 2, from Link 1 to Link 3, from Link 2 to Link 1, from Link 2 to Link 3, from Link 3 to Link 1, and from Link 3 to Link 2 are written. For example, the transition time required to transition from a single-link operation state of Link 3 to a state where the non-AP MLD 2 can scan Link 1 is calculated on the basis of the time for switching the operation frequency of the RF unit from Link 3 to Link 1, the time for activating the PHY unit, the time for switching the PHY unit which is the connection destination of RF unit, and the time for switching the connection destination of the PHY unit, which is connected to the RF unit, to the lower MAC unit corresponding to Link 1.

Next, the non-AP MLD 2 transmits the Multi-link Element to an AP MLD 1.

Next, the non-AP MLD 2 transmits, to the AP MLD 1, an EML OMN frame in which an EMLMR mode subfield is set to 1 and which designates Link 1 to Link 3 as EMLMR links.

The AP MLD 1, which has received the EML OMN frame, returns the EML OMN frame in which the EMLMR mode subfield is set to 1 to the non-AP MLD 2.

The non-AP MLD 2, which has received the EML OMN frame, starts channel scanning at Link 1 to Link 3 by using each PHY unit and reception awaiting of the PPDU.

The AP MLD 1 determines a link that enables the non-AP MLD 2 to start the transmission of a data frame of Data 1 the earliest on the basis of the first transition time required for the non-AP MLD 2 to transition from the multi-link operation state to the single-link operation state of each link and the transmission waiting time of each link.

In the example of Fig. 18, the AP MLD 1 determines that Link 1 is the link that enables the non-AP MLD 2 to start the transmission of the data frame of Data 1 the earliest, and transmits PPDU including a data frame of Data 0 to the non-AP MLD 2 by using Link 1. The PPDU including the data frame of Data 0 is transmitted with padding added thereto. In the EMLMR operation, the PHY unit is used to perform scanning at each link, and thus, even when the non-AP MLD 2 is in the multi-link operation state, the AP MLD 1 can transmit a frame other than an MU-RTS frame and a BSRP Trigger frame to the non-AP MLD 2.

The non-AP MLD 1, which has received the data frame of Data 0, switches the operation frequency of each RF unit to Link 1 and switches the connection destination of each RF unit, the PHY unit, and the lower MAC unit, thereby transitioning from the multi-link operation state (Fig. 9) to the single-link operation state of Link 1 (Fig. 10). After the transition to the single-link transmission/reception state is completed, the non-AP MLD 1 transmits an ACK frame to the AP MLD 1 by using Link 1.

The AP MLD 1, which has received the ACK frame, transmits a plurality of spatially multiplexed streams (data frame of Data 1) to the non-AP MLD 2 by using Link 1.

The non-AP MLD 2, which has received the data frame of Data 1, transmits an ACK frame to the AP MLD 1 by using Link 1.

After the exchange of the frame with the AP MLD 1 ends, the non-AP MLD 2 transitions from the single-link operation state to the multi-link operation state.

The AP MLD 1 waits so as not to transmit the frame in a transition period in which the non-AP MLD 2 transitions from the single-link operation state to the multi-link operation state on the basis of the information regarding the second transition time for each link.

As described above, during the execution of the EMLMR operation, the AP MLD 1 can determine the link that makes the time for waiting the non-AP MLD 2 to transition from the multi-link operation state to the single-link operation state the shortest as the link for frame transmission, so that it becomes possible to reduce the waiting time of the AP MLD 1 and to improve the communication efficiency.

Note that the AP MLD 1 or the non-AP MLD 2 may determine which link at which the EMLMR operation is to be performed and the maximum number of streams to be used in the single-link operation state and the modulation coding scheme (MCS) on the basis of the information regarding the first transition time required to transition from the multi-link operation state to the single-link operation state of each link and the information regarding the second transition time required to transition from the single-link operation state of each link to the multi-link operation state, in the non-AP MLD **2.**

Note that the effects described in the present specification are merely examples and are not limited, and other effects may be provided.

Furthermore, the embodiments to which the present technology is applied are not limited to the above-described embodiments, and various modifications are possible without departing from the scope of the present technology.

### <Examples of Configuration Combinations>

The present technology can also be configured as follows.

(1) A wireless communication apparatus including:
   a communication control unit that determines a link for frame transmission to a wireless communication terminal from among a plurality of links on the basis of information regarding a first transition time, for each of the plurality of links, required for the wireless communication terminal to transition from a multi-link state in which communication is performed by using the plurality of links to a single-link state in which communication can be performed by using any one of the links.
(2) The wireless communication apparatus according to (1), in which
   the communication control unit performs control to cause the wireless communication apparatus to receive the information regarding the first transition time transmitted from the wireless communication terminal.
(3) The wireless communication apparatus according to (1) or (2), in which
   the communication control unit determines the link for frame transmission on the basis of the first transition time for each of the links and a transmission waiting time for each of the links for transmitting a frame to the wireless communication terminal.
(4) The wireless communication apparatus according to (3), in which
   the communication control unit determines the link that makes a total time of the first transition time and the transmission waiting time the shortest as the link for frame transmission.
(5) The wireless communication apparatus according to any one of (1) to (4), in which
   when the wireless communication terminal is in the multi-link state, the communication control unit performs control to cause the wireless communication apparatus to transmit a PPDU including an MU-RTS frame or a BSRP trigger frame to the wireless communication terminal by using the link for frame transmission.
(6) The wireless communication terminal according to any one of (1) to (5), in which
   the wireless communication terminal is provided with an RF unit, a PHY unit, a simple PHY unit for performing channel scanning, and a MAC unit, and
   the first transition time is calculated on the basis of at least any one of a switching time of an operation frequency of the RF unit, a switching time of a connection destination of each of the RF unit, the PHY unit, the simple PHY unit, and the MAC unit, and an activation time of the PHY unit or the simple PHY unit.
(7) The wireless communication apparatus according to any one of (1) to (5), in which
   when the wireless communication terminal is in the multi-link state, the communication control unit performs control to cause the wireless communication apparatus to transmit a PPDU including a data frame to the wireless communication terminal by using the link for frame transmission.
(8) The wireless communication terminal according to any one of (1) to (5) and (7), in which
   the wireless communication terminal is provided with an RF unit, a PHY unit, and a MAC unit, and
   the first transition time is calculated on the basis of at least any one of a switching time of an operation frequency of the RF unit, a switching time of a connection destination of each of the RF unit, the PHY unit, and the MAC unit, and an activation time of the PHY unit.
(9) The wireless communication apparatus according to any one of (1) to (8), in which
   the communication control unit performs control to cause the wireless communication apparatus to transmit a PPDU to which padding having a length corresponding to the information regarding the first transition time is added to the wireless communication terminal by using the link for frame transmission.
(10) The wireless communication apparatus according to any one of (1) to (9), in which
   the communication control unit performs control to cause the wireless communication apparatus to wait without transmitting a frame in a period in which the wireless communication terminal transitions from the single-link state to the multi-link state on the basis of information regarding a second transition time, for each of the links, required for the wireless communication terminal to transition from the single-link state to the multi-link state.
(11) The wireless communication apparatus according to any one of (1) to (10), in which
   the single-link state is a state in which a plurality of spatially multiplexed streams can be transmitted and received by using any one of the plurality of links.
(12) A wireless communication method, performed by a wireless communication apparatus, including:
   determining a link for frame transmission to a wireless communication terminal from among a plurality of links on the basis of information regarding a first transition time, for each of the plurality of links, required for the wireless communication terminal to transition from a multi-link state in which communication is performed by using the plurality of links to a single-link state in which communication can be performed by using any one of the links.
(13) A wireless communication terminal including:
   a communication control unit that performs control to cause the wireless communication terminal to communicate with a wireless communication apparatus, in which
   the communication control unit performs control to cause the wireless communication terminal to transmit, to the wireless communication apparatus, information regarding a first transition time, for each of a plurality of links, required for the wireless communication terminal to transition from a multi-link state in which communication is performed by using the plurality of links to a single-link state in which communication can be performed by using any one of the links.
(14) The wireless communication terminal according to (13), in which
   the communication control unit performs control to cause the wireless communication terminal to perform channel scanning of the plurality of links by using at least any one of a PHY unit and a simple PHY unit for performing channel scanning in the multi-link state.
(15) The wireless communication terminal according to (14), in which
   the first transition time is calculated on the basis of at least any one of a switching time of an operation frequency of an RF unit, a switching time of a connection destination of each of the RF unit, the PHY unit, the simple PHY unit, and a MAC unit, and an activation time of the PHY unit or the simple PHY unit.
(16) The wireless communication terminal according to (15), in which
   the first transition time is a total time or a maximum time of the switching time of the operation frequency of the RF unit, the switching time of the connection destination of each of the RF unit, the PHY unit, the simple PHY unit, and the MAC unit, and the activation time of the PHY unit or the simple PHY unit.
(17) The wireless communication terminal according to any one of (13) to (16), in which
   the information regarding the first transition time includes information indicating the link before transition and information indicating the link after transition.
(18) The wireless communication terminal according to any one of (13) to (17), in which
   the communication control unit performs control to cause the wireless communication terminal to transmit, to the wireless communication apparatus, information regarding a second transition time required for the wireless communication terminal to transition from the single-link state to the multi-link state.
(19) The wireless communication apparatus according to any one of (13) to (18), in which
   the single-link state is a state in which a plurality of spatially multiplexed streams can be transmitted and received by using any one of the plurality of links.
(20) A wireless communication method, performed by a wireless communication terminal that communicates with a wireless communication apparatus, including:
   transmitting, to the wireless communication apparatus, information regarding a first transition time, for each of a plurality of links, required for the wireless communication terminal to transition from a multi-link state in which communication is performed by using the plurality of links to a single-link state in which communication can be performed by using any one of the links.

### REFERENCE SIGNS LIST

- 1: AP MLD
- 2: non-AP MLD
- 110: Wireless communication unit
- 120: Control unit
- 130: Storage unit
- 140: Antenna
- 151: Communication control unit
- 152: Communication storage unit
- 153: Common data processing unit (upper MAC unit)
- 154: Individual data processing unit (lower MAC unit)
- 155: Signal processing unit (PHY unit)
- 156: Wireless interface unit
- 157: Amplification unit
- 210: Wireless communication unit
- 220: Control unit
- 230: Storage unit
- 240: Antenna
- 251: Communication control unit
- 252: Communication storage unit
- 253: Common data processing unit (upper MAC unit)
- 254: Individual data processing unit (lower MAC unit)
- 255: Signal processing unit (PHY unit)
- 255s: Simple signal processing unit (simple PHY **unit,** small PHY unit)
- 256: Wireless interface unit
- 257: Amplification unit

## Claims

1. A wireless communication apparatus comprising:
a communication control unit that determines a link for frame transmission to a wireless communication terminal from among a plurality of links on a basis of information regarding a first transition time, for each of the plurality of links, required for the wireless communication terminal to transition from a multi-link state in which communication is performed by using the plurality of links to a single-link state in which communication can be performed by using any one of the links.

2. The wireless communication apparatus according to claim 1, wherein
the communication control unit performs control to cause the wireless communication apparatus to receive information regarding the first transition time transmitted from the wireless communication terminal.

3. The wireless communication apparatus according to claim 1, wherein
the communication control unit determines the link for frame transmission on a basis of the first transition time for each of the links and a transmission waiting time for each of the links for transmitting a frame to the wireless communication terminal.

4. The wireless communication apparatus according to claim **3,** wherein
the communication control unit determines the link that makes a total time of the first transition time and the transmission waiting time the shortest as the link for frame transmission.

5. The wireless communication apparatus according to claim 1, wherein
when the wireless communication terminal is in the multi-link state, the communication control unit performs control to cause the wireless communication apparatus to transmit a PPDU including an MU-RTS frame or a BSRP trigger frame to the wireless communication terminal by using the link for frame transmission.

6. The wireless communication terminal according to claim 1, wherein
the wireless communication terminal is provided with an RF unit, a PHY unit, a simple PHY unit for performing channel scanning, and a MAC unit, and
the first transition time is calculated on a basis of at least any one of a switching time of an operation frequency of the RF unit, a switching time of a connection destination of each of the RF unit, the PHY unit, the simple PHY unit, and the MAC unit, and an activation time of the PHY unit or the simple PHY unit.

7. The wireless communication apparatus according to claim 1, wherein
when the wireless communication terminal is in the multi-link state, the communication control unit performs control to cause the wireless communication apparatus to transmit a PPDU including a data frame to the wireless communication terminal by using the link for frame transmission.

8. The wireless communication terminal according to claim 1, wherein
the wireless communication terminal is provided with an RF unit, a PHY unit, and a MAC unit, and
the first transition time is calculated on a basis of at least any one of a switching time of an operation frequency of the RF unit, a switching time of a connection destination of each of the RF unit, the PHY unit, and the MAC unit, and an activation time of the PHY unit.

9. The wireless communication apparatus according to claim 1, wherein
the communication control unit performs control to cause the wireless communication apparatus to transmit a PPDU to which padding having a length corresponding to the information regarding the first transition time is added to the wireless communication terminal by using the link for frame transmission.

10. The wireless communication apparatus according to claim 1, wherein
the communication control unit performs control to cause the wireless communication apparatus to wait without transmitting a frame in a period in which the wireless communication terminal transitions from the single-link state to the multi-link state on a basis of information regarding a second transition time, for each of the links, required for the wireless communication terminal to transition from the single-link state to the multi-link state.

11. The wireless communication apparatus according to claim 1, wherein
the single-link state is a state in which a plurality of spatially multiplexed streams can be transmitted and received by using any one of the plurality of links.

12. A wireless communication method, performed by a wireless communication apparatus, comprising:
determining a link for frame transmission to a wireless communication terminal from among a plurality of links on a basis of information regarding a first transition time, for each of the plurality of links, required for the wireless communication terminal to transition from a multi-link state in which communication is performed by using the plurality of links to a single-link state in which communication can be performed by using any one of the links.

13. A wireless communication terminal comprising:
a communication control unit that performs control to cause the wireless communication terminal to communicate with a wireless communication apparatus, wherein
the communication control unit performs control to cause the wireless communication terminal to transmit, to the wireless communication apparatus, information regarding a first transition time, for each of a plurality of links, required for the wireless communication terminal to transition from a multi-link state in which communication is performed by using the plurality of links to a single-link state in which communication can be performed by using any one of the links.

14. The wireless communication terminal according to claim 13, wherein
the communication control unit performs control to cause the wireless communication terminal to perform channel scanning of the plurality of links by using at least any one of a PHY unit and a simple PHY unit for performing channel scanning in the multi-link state.

15. The wireless communication terminal according to claim 14, wherein
the first transition time is calculated on a basis of at least any one of a switching time of an operation frequency of an RF unit, a switching time of a connection destination of each of the RF unit, the PHY unit, the simple PHY unit, and a MAC unit, and an activation time of the PHY unit or the simple PHY unit.

16. The wireless communication terminal according to claim 15, wherein
the first transition time is a total time or a maximum time of the switching time of the operation frequency of the RF unit, the switching time of the connection destination of each of the RF unit, the PHY unit, the simple PHY unit, and the MAC unit, and the activation time of the PHY unit or the simple PHY unit.

17. The wireless communication terminal according to claim 13, wherein
the information regarding the first transition time includes information indicating the link before transition and information indicating the link after transition.

18. The wireless communication terminal according to claim 13, wherein
the communication control unit performs control to cause the wireless communication terminal to transmit, to the wireless communication apparatus, information regarding a second transition time required for the wireless communication terminal to transition from the single-link state to the multi-link state.

19. The wireless communication apparatus according to claim 13, wherein
the single-link state is a state in which a plurality of spatially multiplexed streams can be transmitted and received by using any one of the plurality of links.

20. A wireless communication method, performed by a wireless communication terminal that communicates with a wireless communication apparatus, comprising:
transmitting, to the wireless communication apparatus, information regarding a first transition time, for each of a plurality of links, required for the wireless communication terminal to transition from a multi-link state in which communication is performed by using the plurality of links to a single-link state in which communication can be performed by using any one of the links.
